# EUROPEAN PATENT APPLICATION

(11) **EP 4 699 827 A2**
(43) Date of publication of application: **25.02.2026**
(21) Application number: 25191729.0
(22) Date of filing: 25.07.2025
(51) Int. Cl.: B60D 1/52, B60D 1/60

(54) **HITCH PIN LOCK**

(30) Priority: 26.07.2024 US 202463675881 P
(71) Applicant: Pakmule, LLC, New Braunfels Texas 78131 (US)
(72) Inventor: SARTIN, Kansas, New Braunfels 78130 (US); BOESEL, Lucas, Muskego 53150 (US)
(74) Representative: Boco IP Oy Ab

(57) **Abstract**

A hitch pin lock includes a lock rod and a locking member. The lock rod having a first section, a second section, a fastener, and a spring member. The first section including a flanged head, a first shaft having first external threads, and a hole extending into a first shaft terminal end and including a terminal shoulder and a proximal shoulder. The second section including a tapered head extending from a lock groove, a second shaft, and a second section stud with an internally threaded hole with the second section stud connected to and extending from a second shaft proximal end. The fastener configured to mate with the internally threaded hole of the second section stud. The spring member disposed within the hole with at least a portion of the fastener passing through the spring member. The locking member including a locking member tube having an inside diameter, an outside diameter, and an engagement portion configured to secure to the lock groove when the locking member is in a locked position.

## Description

### CROSS REFERENCES AND PRIORITIES

This Application claims priority to United States Provisional Application No. 63/675,881 filed on 26 July 2024, the teachings of which are incorporated by reference herein in their entirety.

### BACKGROUND

Hitch pins are often used to secure objects - such as vehicle hitches, cargo baskets, and the like - to a hitch receiver mounted on a vehicle. Typically, the hitch receiver will include a plurality of sidewalls surrounding a hollow interior into which a connector of the vehicle hitch, cargo basket, or the like is inserted. A hole passes through two opposing sidewalls of the hitch receiver and may be aligned with a channel in the connector to allow the hitch pin to pass through to secure the connector to the hitch receiver.

In practice, the fitment between the hitch pin and the holes in the opposing sidewalls of the hitch receiver and/or the channel in the connector is often imprecise. The outer dimensions of the hitch pin are smaller than the dimensions of the holes in the opposing sidewalls of the hitch receiver and/or the channel in the connector to such a degree that the connector is frequently not tightly secured to the hitch receiver. In addition, the exterior dimensions of the connector may be such that a gap exists between the exterior of the connector and the inner surfaces of the sidewalls of the hitch receiver. These fitment issues may lead to undesirable rocking or swaying during use. Further, existing hitch pins are often easy to remove by those other than the owner/operator of the vehicle in trailer, which frequently leads to theft of hitches and/or trailers.

Attempts have been made to address unwanted rocking or swaying caused by these poor fitment issues. One such attempt is described in United States Patent No. 10,780,751 B2, the teachings of which are incorporated by reference herein in their entirety. United States Patent No. 10,780,751 B2 describes a hitch system for coupling an object to a vehicle hitch. The hitch system can have a connector adapted to connect to a vehicle hitch having a connector channel that passes through the connector and has an internal threaded section; a lock rod having, a first section wherein at least a portion of the first section is threaded wherein the internal threaded section of the connector are adapted to receive the threads of the first section of the lock rod and a second section; and a locking member having a first locking member channel having an inside diameter and an outside diameter wherein the inside diameter of the locking member channel is smaller than the diameter of the second section and a lock to move between a locked position and an opened position wherein the second section of the lock rod is secured to the locking member when the second section is disposed within the locking member channel and the lock is in the locked position and is removable when the lock is in the opened position.

In practice, the threaded connection between the lock rod and the connector channel in United States Patent No. 10,780,751 B2 has been found to reduce or eliminate undesirable rocking or swaying during use by providing a tight engagement between the hitch pin, the connector, and the hitch receiver. However, it has been observed that the threaded connection may create vulnerability to theft as the threaded connection may be easily decoupled without changing the locking member to the opened position, thereby allowing the entire hitch pin to be removed.

The need exists, therefore, for an improved hitch pin lock and hitch system which both reduces or eliminates unwanted rocking or swaying during use, and also reduces or eliminates the threat of theft due to the ability for the hitch pin to be removed without changing the locking member to the opened position.

### SUMMARY

Disclosed herein is a hitch pin lock. The hitch pin lock includes a lock rod and a locking member. The lock rod has a first section, a second section, a fastener, and a spring member. The first section includes a flanged head, a first shaft extending from the flanged head and having external threads disposed on at least a portion of a length of the first shaft, and a hole extending into a first shaft terminal end with said hole having a terminal shoulder and a proximal shoulder. The second section includes a tapered head extending from a lock groove, a second shaft connected to the lock groove, and a second shaft stud connected to and extending from a second shaft proximal end with said second shaft stud having an internally threaded hole. The fastener is configured to mate with the internally threaded hole. The spring member is disposed within the hole with at least a portion of the fastener passing through the spring member. The locking member includes a locking member tube disposed therein with said locking member tube having an inside diameter, an outside diameter, and an engagement portion. The engagement portion of the locking member is configured to secure to the lock groove when the locking member is in a locked position.

In some embodiments, the locking member may include a sidewall hole, and an indicator disk configured to abut against the tapered head of the second section of the lock rod and slideably engage with the locking member tube with a portion of the indicator disk extending into the sidewall hole when the engagement portion of the locking member is secured in the lock groove.

In certain embodiments, the hole may be a blind hole. In other embodiments, the hole may be a through hole. In embodiments where the hole is a through hole, the hole may include a sealing member at a proximal end thereof.

In some embodiments, the flanged head may include a bolt head. In certain embodiments, the lock rod may further include a washer disposed against the flanged head. In some embodiments, the fastener may include a bolt head.

In certain embodiments, the hitch pin lock may further include a coupler. When present, the coupler may include a coupler first section, a coupler second section, a nut, a central spring, a plurality of peripheral springs, and a plurality of pins. The coupler first section may have a first central through hole, a plurality of blind pin holes, a plurality of first blind spring holes, and at least one engagement tab. The coupler second section may have a second central through hole, a plurality of second pin holes, a plurality of second blind spring holes, and at least one engagement recess with each engagement recess configured to mate with an engagement tab of the at least one engagement tab. The nut may be disposed within the first central through hole. The central spring may be disposed within the second central through hole and may abut against a surface of the nut. Each peripheral spring of the plurality of peripheral springs may be located between a first blind spring hole of the plurality of first blind spring holes and a second blind spring hole of the plurality of second blind spring holes. Each pin of the plurality of pins may extend through a second pin hole of the plurality of second pin holes and into a first blind pin hole of the plurality of first blind pin holes. The lock rod may be configured to pass into and through the first central through hole, the nut, and the second central through hole with the external threads configured to mate with the nut.

Also described herein is a hitch system. The hitch system includes a connector, a lock rod, and a locking member. The connector has a connector channel passing through the connector perpendicular to a connector central axis and having a threaded section on a channel inner surface. The lock rod has a first section, a second section, a fastener, and a spring member. The first section includes a flanged head, a first shaft extending from the flanged head and having external threads disposed on at least a portion of a length of the first shaft, and a hole extending into a first shaft terminal end with said hole having a terminal shoulder and a proximal shoulder. The second section includes a tapered head extending from a lock groove, a second shaft connected to the lock groove, and a second shaft stud connected to and extending from a second shaft proximal end with said second shaft stud having an internally threaded hole. The fastener is configured to mate with the internally threaded hole. The spring member is disposed within the hole with at least a portion of the fastener passing through the spring member. The locking member includes a locking member tube disposed therein with said locking member tube having an inside diameter, an outside diameter, and an engagement portion. The engagement portion of the locking member is configured to secure to the lock groove when the locking member is in a locked position. The external threads of the first shaft of the first section of the lock rod are configured to mate with the threaded section of the connector channel of the connector.

In some embodiments, the locking member may include a sidewall hole, and an indicator disk configured to abut against the tapered head of the second section of the lock rod and slideably engage with the locking member tube with a portion of the indicator disk extending into the sidewall hole when the engagement portion of the locking member is secured in the lock groove.

In certain embodiments, the hole may be a blind hole. In other embodiments, the hole may be a through hole. In embodiments where the hole is a through hole, the hole may include a sealing member at a proximal end thereof.

In some embodiments, the flanged head may include a bolt head. In certain embodiments, the lock rod may further include a washer disposed against the flanged head. In some embodiments, the fastener may include a bolt head.

In certain embodiments, the hitch system may further include a coupler. When present, the coupler may include a coupler first section, a coupler second section, a nut, a central spring, a plurality of peripheral springs, and a plurality of pins. The coupler first section may have a first central through hole, a plurality of blind pin holes, a plurality of first blind spring holes, and at least one engagement tab. The coupler second section may have a second central through hole, a plurality of second pin holes, a plurality of second blind spring holes, and at least one engagement recess with each engagement recess configured to mate with an engagement tab of the at least one engagement tab. The nut may be disposed within the first central through hole. The central spring may be disposed within the second central through hole and may abut against a surface of the nut. Each peripheral spring of the plurality of peripheral springs may be located between a first blind spring hole of the plurality of first blind spring holes and a second blind spring hole of the plurality of second blind spring holes. Each pin of the plurality of pins may extend through a second pin hole of the plurality of second pin holes and into a first blind pin hole of the plurality of first blind pin holes. The lock rod may be configured to pass into and through the first central through hole, the nut, and the second central through hole with the external threads configured to mate with the nut.

Further disclosed herein is a hitch pin lock which includes a lock rod and a coupler. The lock rod includes a shaft having external threads disposed on at least a portion of a length of the shaft. The coupler includes a coupler first section, a coupler second section, a nut, a central spring, a plurality of peripheral springs, and a plurality of pins. The coupler first section may have a first central through hole, a plurality of blind pin holes, a plurality of first blind spring holes, and at least one engagement tab. The coupler second section may have a second central through hole, a plurality of second pin holes, a plurality of second blind spring holes, and at least one engagement recess with each engagement recess configured to mate with an engagement tab of the at least one engagement tab. The nut may be disposed within the first central through hole. The central spring may be disposed within the second central through hole and may abut against a surface of the nut. Each peripheral spring of the plurality of peripheral springs may be located between a first blind spring hole of the plurality of first blind spring holes and a second blind spring hole of the plurality of second blind spring holes. Each pin of the plurality of pins may extend through a second pin hole of the plurality of second pin holes and into a first blind pin hole of the plurality of first blind pin holes. The lock rod may be configured to pass into and through the first central through hole, the nut, and the second central through hole with the external threads configured to mate with the nut.

### BRIEF DESCRIPTION OF FIGURES

FIG. 1 is a perspective view of an assembled hitch pin lock.
FIG. 2 is an exploded perspective view of a hitch pin lock.
FIG. 3 is an exploded cross section view of a hitch pin lock.
FIG. 4 is an assembled cross section view of a hitch pin lock with a lock rod in a first position.
FIG. 5 is an assembled cross section view of a hitch pin lock with a lock rod in a second position.
FIG. 6 is a perspective view of an assembled hitch system.
FIG. 7 is an exploded perspective view of a hitch system.
FIG. 8 is a cross section view of a hitch system.

### DETAILED DESCRIPTION

Disclosed herein is a hitch pin lock and a hitch system. The hitch pin lock and hitch system are described below with reference to the Figures. As described herein and in the claims, the following numbers refer to the following structures as noted in the Figures.
10 refers to a hitch pin lock.
100 refers to a lock rod.
110 refers to a stud.
111 refers to a flanged head.
112 refers to external threads.
113 refers to a lock groove.
114 refers to a tapered head.
120 refers to a coupler.
130 refers to a coupler first section.
131 refers to a first central through hole.
132 refers to a first blind pin hole.
133 refers to a first blind spring hole.
134 refers to an engagement tab.
140 refers to a nut.
141 refers to a central spring.
142 refers to a peripheral spring.
143 refers to a pin.
150 refers to a coupler second section.
151 refers to a second central through hole.
152 refers to a second pin hole.
153 refers to a second blind spring hole.
154 refers to an engagement recess.
160 refers to a first section.
161 refers to a first shaft.
162 refers to a hole.
163 refers to a first shaft terminal end.
164 refers to a terminal shoulder.
165 refers to a proximal shoulder.
166 refers to a sealing member.
170 refers to a second section.
171 refers to a second shaft.
172 refers to a second shaft stud.
173 refers to a second shaft proximal end.
174 refers to an internally threaded hole.
180 refers to a fastener.
190 refers to a spring member.
200 refers to a locking member.
210 refers to a locking member tube.
220 refers to an inside diameter.
230 refers to an outside diameter.
240 refers to an engagement portion.
250 refers to a sidewall hole.
260 refers to an indicator disk.
300 refers to a connector.
310 refers to a connector channel.
320 refers to a connector central axis.
330 refers to a threaded section.
340 refers to a channel inner surface.
400 refers to a vehicle hitch receiver.

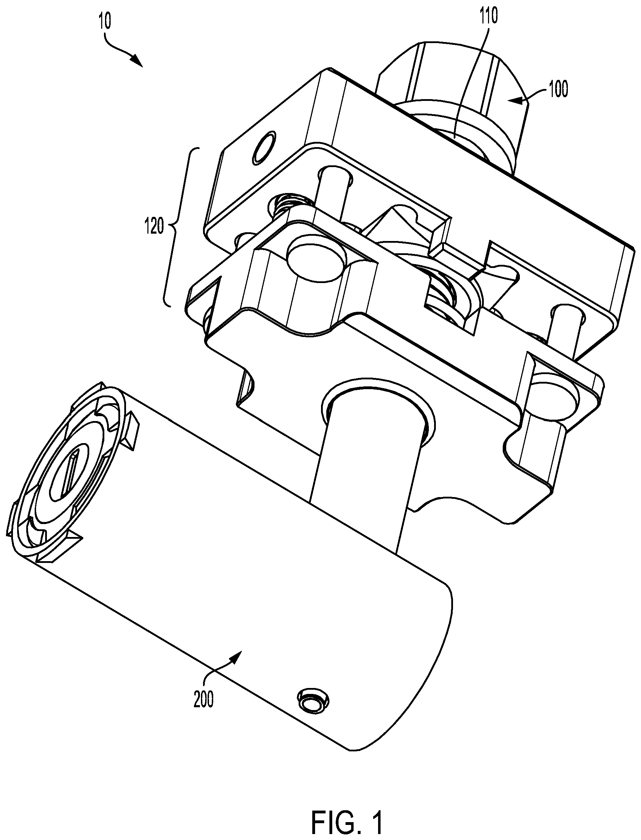

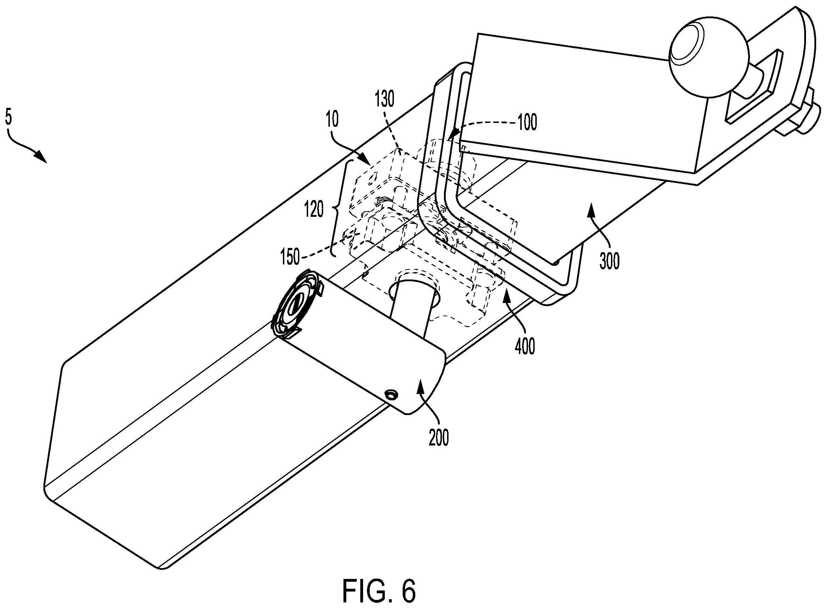

FIG. 1 illustrates a perspective view of an assembled hitch pin lock (10) which may be used to secure a connector ((300) as shown in FIG. 6) to a vehicle hitch receiver ((400) as shown in FIG. 6). As shown in FIG. 1, the hitch pin lock includes a lock rod (100) and a locking member (200), details of exemplary embodiments of which are shown in the Figures. While not required, in some embodiments the hitch pin lock may include a coupler (120) as shown in FIG. 1.

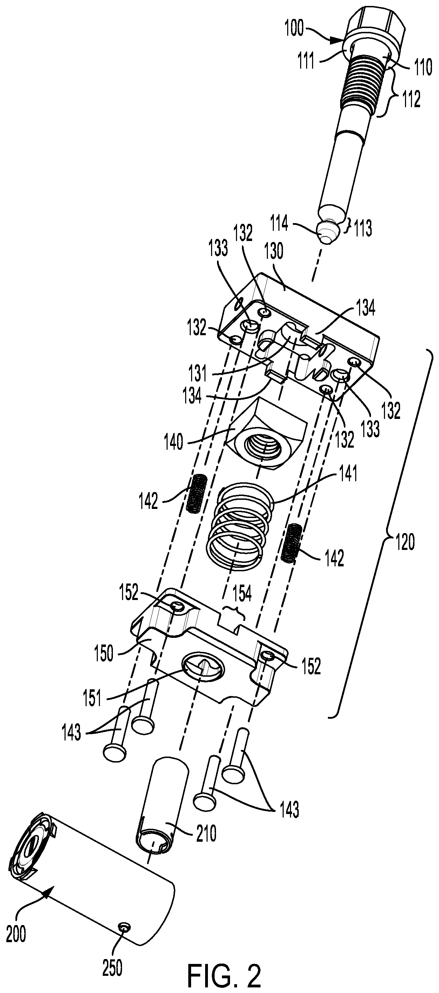

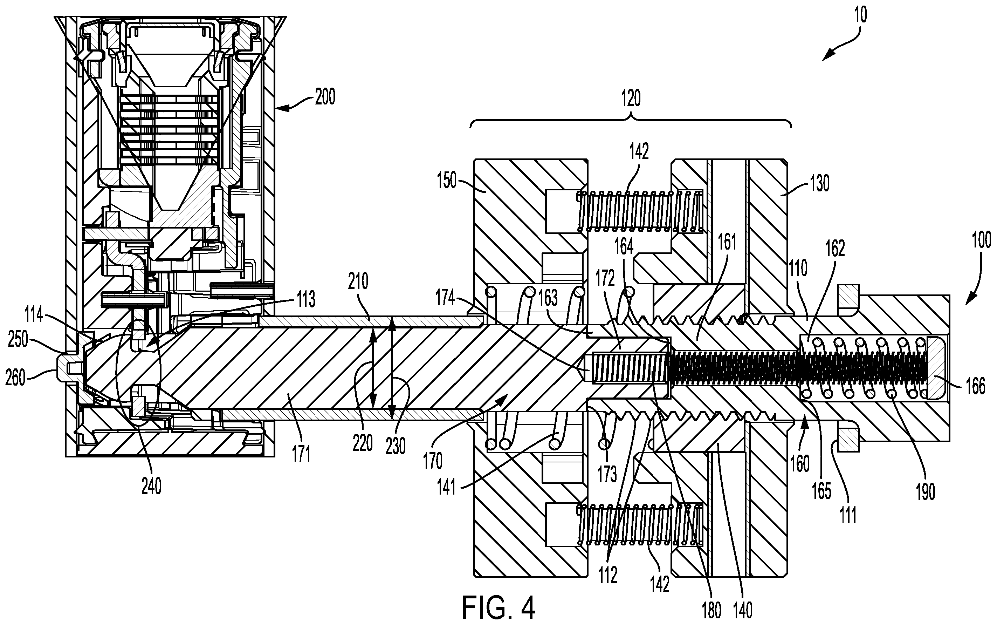

FIG. 2 illustrates the hitch pin lock (10) in exploded perspective view showing additional details of an exemplary embodiment thereof. As shown in FIG. 4, the lock rod (100) may include a first section (160), a second section (170), a fastener (180), and a spring member (190).

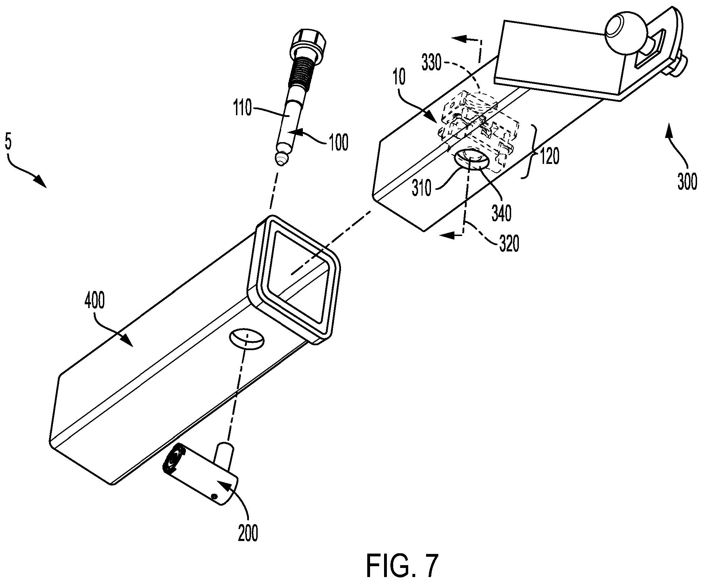

In the exemplary embodiment shown in FIG. 2, the first section (160) (as shown in FIG. 4) of the lock rod (100) includes a flanged head (111). The flanged head in certain embodiments may include a bolt head such as a hex bolt head, an allen bolt head, a button bolt head, a carriage bolt head, or the like. In certain embodiments, a washer (not shown) may be included against the flanged head. Attached to and extending from the flanged head is a first shaft (161) (as shown in FIG. 4). The first shaft may include external threads (112) disposed on at least a portion of a length of the first shaft as shown in FIG. 2. When present, these external threads may be configured to mate with a threaded section ((330) as shown in FIG. 7) of a connector channel (310) as shown in FIG. 7) of a connector ((300) as shown in FIG. 7) as described herein. Such configuration is considered useful in embodiments where the hitch pin lock (10) does not include a coupler (120). A hole (162) (as shown in FIG. 4) extends into a first shaft terminal end (163) (as shown in FIG. 4) which is opposite of the flanged head as shown in FIG. 4. The hole may be aligned with a first shaft central axis, and therefore may be referred to as an axial hole. The hole may be a blind hole which does not pass through the first section end having the flanged head or may be a through hole which does pass through the first section end having the flanged head. In some embodiments where the hole is a through hole, a sealing member ((166) as shown in FIG. 4) may be included which prevents access to the hole from the first section end having the flanged head.

The second section (170) (as shown in FIG. 4) of the lock rod (100) in the exemplary embodiment shown in FIG. 2 includes a tapered head (114) extending from a lock groove (113) which may extend around all or a portion of the radius of the second section, and therefore may be referred to as a radial groove. The lock groove being configured to secure to an engagement portion ((240) as shown in FIG. 4) of the locking member (200) as described herein. As shown in FIG. 4, extending from the lock groove opposite the tapered head is a second shaft (171) having a second shaft stud (172) connected to and extending from a second shaft proximal end (173).

In the exemplary embodiment shown in FIG. 2, the fastener (180) (as shown in FIG. 4) includes a second flanged head. The second flanged head in certain embodiments may include a bolt head such as a hex bolt head, an allen bolt head, a button bolt head, a carriage bolt head, or the like. Attached to and extending from the second flanged head is a third shaft. The third shaft may include second external threads disposed on at least a portion of the third shaft as shown in FIG. 2. The second external threads preferably being configured to mate with an internally threaded hole ((174) as shown in FIG. 4) of the second shaft stud (172) as described herein.

FIG. 2 also illustrates an exemplary embodiment of an (optional) coupler (120). The coupler may be useful for embodiments in which the connector ((300) as shown in FIG. 7) does not include a threaded section ((330) as shown in FIG. 7) to which the external threads (112) of the stud (110) may attach. As shown in FIG. 2, the coupler may include a coupler first section (130), a nut (140), a central spring (141), a plurality of peripheral springs (142), a plurality of pins (143), and a coupler second section (150).

The coupler first section (130) may include a first central through hole (131) through which a portion of the lock rod (100) is configured to pass once assembled as shown in FIG. 1. The coupler first section may also include a plurality of first blind pin holes (132), a plurality of first blind spring holes (133), and at least one engagement tab (134). The blind pin holes, blind spring holes, and engagement tabs - in conjunction with the plurality of peripheral springs (142), plurality of pins (143), and engagement recess(es) (154) of the coupler second section (150) - serve to maintain the coupler's alignment and prevent the coupler first section and coupler second section from rotating about their central axes relative to one another.

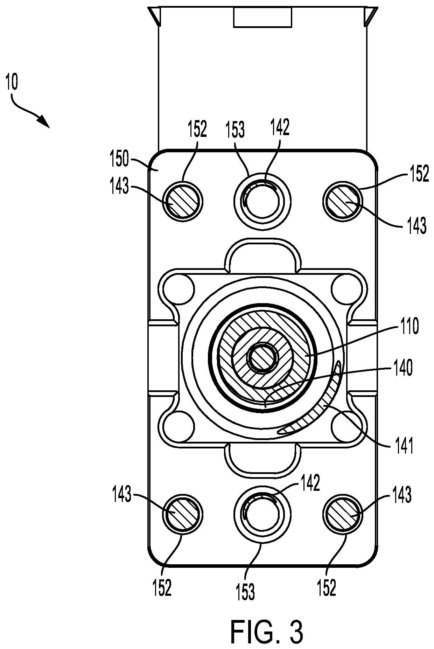

The coupler second section (150) may include a second central through hole (151) through which a portion of the lock rod (100) is configured to pass once assembled as shown in FIG. 1. The coupler second section may also include a plurality of second pin holes (152), a plurality of second blind spring holes (153) (as shown in FIG. 3), and at least one engagement recess (154). Each engagement recess will preferably be configured to mate with an engagement tab (134) of the coupler first section (130).

When assembled, the nut (140) will be disposed within the first central through hole (131) with the central spring disposed within the second central through hole (151) and abutting against a surface of the nut. The external threads (112) of the lock rod (100) may be configured to mate with the nut to securely connect the lock rod to the coupler (120).

Each peripheral spring (142) of the plurality of peripheral springs will be located between a first blind spring hole (133) of the plurality of first blind spring holes and a second blind spring hole (153) (as shown in FIG. 3) of the plurality of second blind spring holes. Similarly, each pin (143) of the plurality of pins will extend through a second pin hole (152) of the plurality of second pin holes and into a first blind pin hole (132) of the plurality of blind pin holes. This configuration assists in preventing rotational movement of the coupler first section (130) and the coupler second section (150) relative to one another while the peripheral springs allow for an easily adjustable gap between the coupler first section and the coupler second section.

While the Figures illustrate the coupler (120) including two peripheral springs (142) and four pins (143), other embodiments may exist. For example, the number of peripheral springs may be an integer in the range of between 2 and 10. Preferably, the number of peripheral springs will be equal to the number of first blind spring holes (133) and the number of second blind spring holes (153). Similarly, the number of pins may be an integer in the range of between 2 and 10. Preferably, the number of pins will be equal to the number of first blind pin holes (132) and the number of second pin holes (152).

While the coupler (120) is illustrated in use with the hitch pin lock described herein, use of the coupler is not so limited. The couple may be utilized with any number of different configurations of lock rods for a hitch pin. One non-limiting example of such a lock rod is disclosed in United States Patent No. 10,780,751 B2 - the teachings of which are incorporated by reference herein in their entirety.

FIG. 3 illustrates an exemplary embodiment of a hitch pin lock (10) in exploded cross section. As shown in FIG. 4, the hole (162) extending into the first shaft terminal end (163) of the first section (160) of the lock rod (100) may include a pair of shoulders. The pair of shoulders including a terminal shoulder (164) located closer to the first shaft terminal end (163) than the flanged head (111), and a proximal shoulder (165) located closer to the flanged head than the first shaft terminal end.

Also shown in the exemplary embodiment of a hitch pin lock (10) shown in FIG. 4 is an internally threaded hole (174) in the second shaft stud (172). As shown in FIG. 4, the internally threaded hole may be aligned with a second shaft central axis, and therefore may be referred to as an axial internally threaded hole. The internally threaded hole preferably will be a blind hole in that the internally threaded hole originates at an end of the stud opposite the second shaft proximal end (173) without passing through the second section end corresponding to the tapered head (114). However, in some embodiments, the internally threaded hole may be a through hole which originates at the end of the stud opposite the second shaft proximal end and passes through the second section end corresponding to the tapered head.

FIG. 4 illustrates additional features of a locking member (200) of an exemplary embodiment of a hitch pin lock (10). As shown in FIG. 4, the locking member may include a locking member tube (210) having an inside diameter (220) and an outside diameter (230). The locking member may also include an engagement portion (240) which may be configured to secure to the lock groove (113) of the second section (170) of the lock rod (100) when the locking member is in a locked position.

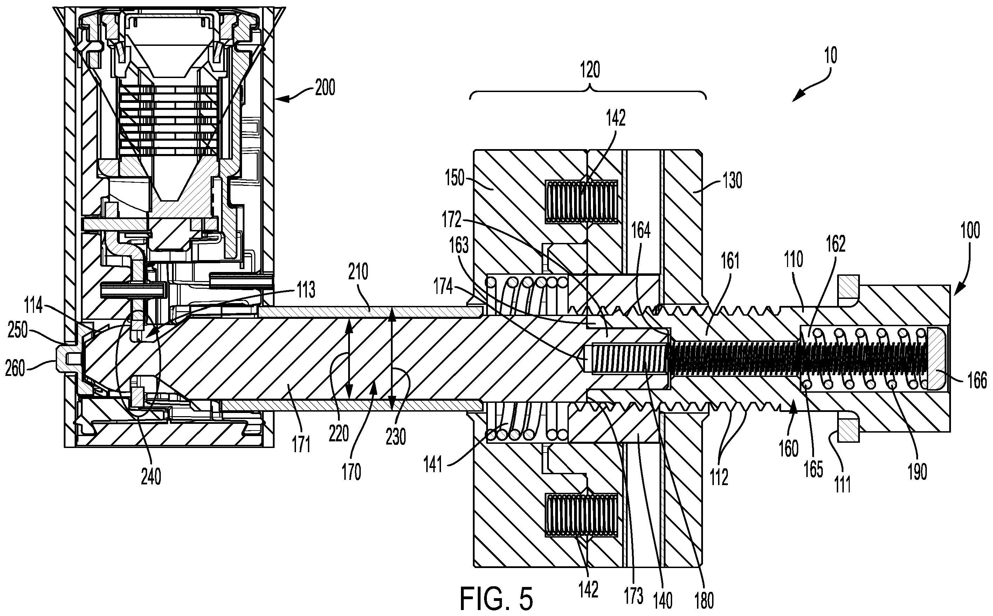

FIG. 4 and FIG. 5 illustrate an exemplary embodiment of a hitch pin lock (10) in cross section with FIG. 4 showing the spring member (190) and the central spring (141) in a relaxed position and FIG. 5 showing the spring member and the central spring in a compressed position. When assembled, the spring member may be disposed within the hole (162) with a central axis of the spring member substantially aligned with the central axis of the first shaft (161). The third shaft of the fastener (180) may then pass into and through an internal section of the spring member before being threaded into the internally threaded hole (174) as shown in FIG. 4 and FIG. 5.

When the spring member (190) and the central spring (141) are in the relaxed position as shown in FIG. 4, the second shaft stud (172) passes into a portion of the hole (162) originating from the first shaft terminal end (163). The second shaft stud is prevented from extending into the entirety of the hole by an interaction between the terminal shoulder (164) and the end of the second shaft stud and/or an interaction between the second shaft proximal end (173) and the first shaft terminal end.

When the spring member (190) is in a compressed position as shown in FIG. 5, a portion of the second shaft stud (172) is pulled out of the hole (162) originating from the first shaft terminal end (163) thereby increasing the overall length of the lock rod (100). The second shaft stud may be prevented from pulling the entire way out of the hole by an interaction between the flanged head (111) and the proximal shoulder (165) as shown in FIG. 5.

FIG. 6 illustrates a perspective assembled view of a hitch system (5) including a hitch pin lock (10) which may be of any type described herein and shown in the Figures. As shown in FIG. 6, in addition to the hitch pin lock including the lock rod (100) and the locking member (200), the hitch system may also include a connector (300) and a vehicle hitch receiver (400).

FIG. 7 illustrates an exploded perspective view of the hitch system (5) shown in FIG. 6 including additional details of the connector (300). As shown in FIG. 7, the connector may include a connector channel (310) which passes through the connector perpendicular to a connector central axis (320). Preferably, the connector channel will include a threaded section (330) on a channel inner surface.

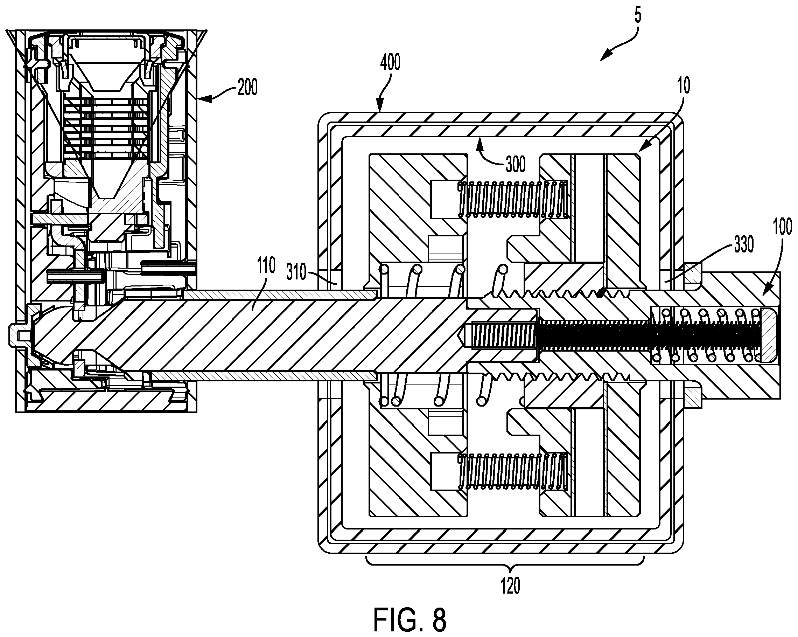

FIG. 8 illustrates a cross sections of a hitch system (5). As shown in FIG. 8, the external threads (112) (as shown in FIG. 2) of the first shaft (161) (as shown in FIG. 4) of the first section (160) of the lock rod (100) are configured to mate with the threads of the nut (140) (as shown in FIG. 4) of the coupler (120) to secure the lock rod to the coupler and thereby prevent or reduce lateral movement, rocking, or unauthorized removal of the hitch pin lock (10). However, embodiments may exist in which the external threads of the first shaft of the first section of the lock rod are configured to mate with the threaded section (330) of the connector channel (310) of the connector (300) to secure the hitch pin lock (10) to the connector. This configuration is preferred in embodiments where the hitch pin lock (10) does not include a coupler (120).

The hitch pin lock and hitch system described herein represents an improvement over the prior art in that the fastener and spring member prevent - or at least reduce the ability to - decouple the threaded connection between the lock rod and the connector channel without changing the locking member to the opened position. Attempts to do so will result in the second flanged head of the fastener stopping against the proximal shoulder before the threaded connection between the lock rod and the connector channel can be fully removed, thus preventing removal of the hitch pin. At the same time, the hitch pin lock and hitch system described herein maintains the threaded connection between the lock rod and the connector channel to reduce or eliminate unwanted rocking or swaying during use. The split design of the hitch pin lock further reduces or eliminates axial force which reduces the chances that the split pin will come dislodged during use and further makes it more difficult for unauthorized users to remove the hitch pin lock to steal the hitch and/or trailer.

While the hitch pin lock and the hitch system have been described as having one or more exemplary designs, the present article may be further modified within the spirit and scope of this disclosure. This application is therefore intended to cover any variations, uses, or adaptations of the hitch pin lock and or the hitch system using their general principles.

## Claims

1. A hitch pin lock (10) comprising:
a lock rod (100) having:
a first section (160) comprising a flanged head (111), a first shaft (161) extending from the flanged head having external threads (112) disposed on at least a portion of a length of said first shaft, and a hole (162) extending into a first shaft terminal end (163), said hole having a terminal shoulder (164) and a proximal shoulder (165);
a second section (170) comprising tapered head (114) extending from a lock groove (113), a second shaft (171) connected to the lock groove, and a second shaft stud (172) connected to and extending from a second shaft proximal end (173), said second shaft stud having an internally threaded hole (174);
a fastener (180) configured to mate with the internally threaded hole; and
a spring member (190) disposed within the hole with at least a portion of the fastener passing through the spring member; and
a locking member (200) having a locking member tube (210) disposed therein, said locking member tube having an inside diameter (220), an outside diameter (230), and an engagement portion (240); and
wherein the engagement portion of the locking member is configured to secure to the lock groove when the locking member is in a locked position.

2. The hitch pin lock of claim 1, wherein the locking member includes a sidewall hole (250) an indicator disk (260) configured to abut against the tapered head of the second section of the lock rod and slideably engage with the locking member tube with a portion of the indicator disk extending into the sidewall hole when the engagement portion of the locking member is secured in the lock groove.

3. The hitch pin lock of claim 1, wherein the hole is a blind hole.

4. The hitch pin lock of claim 1, wherein the hole is a through hole.

5. The hitch pin lock of claim 1, wherein the flanged head includes a bolt head.

6. The hitch pin lock of claim 1, wherein the lock rod further comprises a washer disposed against the flanged head.

7. The hitch pin lock of claim 1, wherein the fastener includes a bolt head.

8. The hitch pin lock of claim 1, further comprising a coupler (120), said coupler comprising:
a coupler first section (130) having first central through hole (131), a plurality of first blind pin holes (132), a plurality of first blind spring holes (133) and at least one engagement tab (134);
a coupler second section (150) having a second central through hole (151), a plurality of second pin holes (152), a plurality of second blind spring holes (153), and at least one engagement recess (154) with each engagement recess configured to mate with an engagement tab of the at least one engagement tab;
a nut (140) disposed within the first central through hole;
a central spring (141) disposed within the second central through hole and abutting against a surface of the nut;
a plurality of peripheral springs (142) with each peripheral spring of the plurality of peripheral springs located between a first blind spring hole of the plurality of first blind spring holes and a second blind spring hole of the plurality of second blind spring holes; and
a plurality of pins (143) with each pin of the plurality of pins extending through a second pin hole of the plurality of second pin holes and into a first blind pin holes of the plurality of first blind pin holes; and
wherein the lock rod is configured to pass into and through the first central through hole, the nut, and the second central through hole with the external threads configured to mate with the nut.

9. The hitch pin lock of claim 2, wherein the flanged head includes a bolt head.

10. The hitch pin lock of claim 2, wherein the fastener includes a bolt head.

11. The hitch pin lock of claim 2, further comprising a coupler (120), said coupler comprising:
a coupler first section (130) having first central through hole (131), a plurality of first blind pin holes (132), a plurality of first blind spring holes (133) and at least one engagement tab (134);
a coupler second section (150) having a second central through hole (151), a plurality of second pin holes (152), a plurality of second blind spring holes (153), and at least one engagement recess (154) with each engagement recess configured to mate with an engagement tab of the at least one engagement tab;
a nut (140) disposed within the first central through hole;
a central spring (141) disposed within the second central through hole and abutting against a surface of the nut;
a plurality of peripheral springs (142) with each peripheral spring of the plurality of peripheral springs located between a first blind spring hole of the plurality of first blind spring holes and a second blind spring hole of the plurality of second blind spring holes; and
a plurality of pins (143) with each pin of the plurality of pins extending through a second pin hole of the plurality of second pin holes and into a first blind pin holes of the plurality of first blind pin holes; and
wherein the lock rod is configured to pass into and through the first central through hole, the nut, and the second central through hole with the external threads configured to mate with the nut.

12. The hitch pin lock of claim 4, wherein the hole includes a sealing member (118) at a proximal end thereof.

13. The hitch pin lock of claim 9, wherein the fastener includes a bolt head.

14. The hitch pin lock of claim 9, further comprising a coupler (120), said coupler comprising:
a coupler first section (130) having first central through hole (131), a plurality of first blind pin holes (132), a plurality of first blind spring holes (133) and at least one engagement tab (134);
a coupler second section (150) having a second central through hole (151), a plurality of second pin holes (152), a plurality of second blind spring holes (153), and at least one engagement recess (154) with each engagement recess configured to mate with an engagement tab of the at least one engagement tab;
a nut (140) disposed within the first central through hole;
a central spring (141) disposed within the second central through hole and abutting against a surface of the nut;
a plurality of peripheral springs (142) with each peripheral spring of the plurality of peripheral springs located between a first blind spring hole of the plurality of first blind spring holes and a second blind spring hole of the plurality of second blind spring holes; and
a plurality of pins (143) with each pin of the plurality of pins extending through a second pin hole of the plurality of second pin holes and into a first blind pin holes of the plurality of first blind pin holes; and
wherein the lock rod is configured to pass into and through the first central through hole, the nut, and the second central through hole with the external threads configured to mate with the nut.

15. The hitch pin lock of claim 10, further comprising a coupler (120), said coupler comprising:
a coupler first section (130) having first central through hole (131), a plurality of first blind pin holes (132), a plurality of first blind spring holes (133) and at least one engagement tab (134);
a coupler second section (150) having a second central through hole (151), a plurality of second pin holes (152), a plurality of second blind spring holes (153), and at least one engagement recess (154) with each engagement recess configured to mate with an engagement tab of the at least one engagement tab;
a nut (140) disposed within the first central through hole;
a central spring (141) disposed within the second central through hole and abutting against a surface of the nut;
a plurality of peripheral springs (142) with each peripheral spring of the plurality of peripheral springs located between a first blind spring hole of the plurality of first blind spring holes and a second blind spring hole of the plurality of second blind spring holes; and
a plurality of pins (143) with each pin of the plurality of pins extending through a second pin hole of the plurality of second pin holes and into a first blind pin holes of the plurality of first blind pin holes; and
wherein the lock rod is configured to pass into and through the first central through hole, the nut, and the second central through hole with the external threads configured to mate with the nut.

16. A hitch system (5), comprising:
a connector (300) having a connector channel (310) passing through the connector perpendicular to a connector central axis (320), said connector channel having a threaded section (330) on a channel inner surface (340);
a lock rod (100) having:
a first section (160) comprising a flanged head (111), a first shaft (161) extending from the flanged head having external threads (112) disposed on at least a portion of a length of said first shaft, and a hole (162) extending into a first shaft terminal end (163), said hole having a terminal shoulder (164) and a proximal shoulder (165);
a second section (170) comprising a tapered head (114) extending from a lock groove (113), a second shaft (171) connected to the lock groove, and a second shaft stud (172) connected to and extending from a second shaft proximal end (173), said second shaft stud having an internally threaded hole (174);
a fastener (180) configured to mate with the internally threaded hole; and
a spring member (190) disposed within the hole with at least a portion of the fastener passing through the spring member; and
a locking member (200) having a locking member tube (210) disposed therein, said locking member tube having an inside diameter (220), an outside diameter (230), and an engagement portion (240); and
wherein the engagement portion of the locking member is configured to secure to the lock groove when the locking member is in a locked position, and the external threads of the first shaft of the first section of the lock rod are configured to mate with the threaded section of the connector channel of the connector.

17. The hitch system of claim 16, wherein the locking member includes a sidewall hole (250) an indicator disk (260) configured to abut against the tapered head of the second section of the lock rod and slideably engage with the locking member tube with a portion of the indicator disk extending into the sidewall hole when the engagement portion of the locking member is secured in the lock groove.

18. The hitch system of claim 16, further comprising a coupler (120), said coupler comprising:
a coupler first section (130) having first central through hole (131), a plurality of first blind pin holes (132), a plurality of first blind spring holes (133) and at least one engagement tab (134);
a coupler second section (150) having a second central through hole (151), a plurality of second pin holes (152), a plurality of second blind spring holes (153), and at least one engagement recess (154) with each engagement recess configured to mate with an engagement tab of the at least one engagement tab;
a nut (140) disposed within the first central through hole;
a central spring (141) disposed within the second central through hole and abutting against a surface of the nut;
a plurality of peripheral springs (142) with each peripheral spring of the plurality of peripheral springs located between a first blind spring hole of the plurality of first blind spring holes and a second blind spring hole of the plurality of second blind spring holes; and
a plurality of pins (143) with each pin of the plurality of pins extending through a second pin hole of the plurality of second pin holes and into a first blind pin holes of the plurality of first blind pin holes; and
wherein the lock rod is configured to pass into and through the first central through hole, the nut, and the second central through hole with the external threads configured to mate with the nut.

19. A hitch pin lock (10) comprising:
a lock rod (100) comprising a shaft having external threads (112) disposed on at least a portion of a length of the shaft; and
a coupler (120) comprising:
a coupler first section (130) having a first central through hole (131), a plurality of first blind pin holes (132), a plurality of first blind spring holes (133), and at least one engagement tab (134);
a coupler second section (150) having a second central through hole (151), a plurality of second pin holes (152), a plurality of second blind spring holes (153), and at least one engagement recess (154) with each engagement recess configured to mate with an engagement tab of the at least one engagement tab;
a nut (140) disposed within the first central through hole;
a central spring (141) disposed within the second central through hole and abutting against a surface of the nut;
a plurality of peripheral springs (142) with each peripheral spring of the plurality of peripheral springs located between a first blind spring hole of the plurality of first blind spring holes and at second blind spring hole of the plurality of second blind spring holes; and
a plurality of pins (143) with each pin of the plurality of pins extending through a second pin hole of the plurality of second pin holes and into a first blind pin hole of the plurality of first blind pin holes; and
wherein the lock rod is configured to pass into and through the first central through hole, the nut, and the second central through hole with the external threads configured to mate with the nut.

20. The hitch system of claim 19, wherein the locking member includes a sidewall hole (250) an indicator disk (260) configured to abut against the tapered head of the second section of the lock rod and slideably engage with the locking member tube with a portion of the indicator disk extending into the sidewall hole when the engagement portion of the locking member is secured in the lock groove.
